**Europäisches Patentamt**

**European Patent Office**

**Office européen des brevets**

(19)

(11) Publication number: **0 112 095**

**A1**

(12)

# EUROPEAN PATENT APPLICATION

(21) Application number: **83307315.8**

(22) Date of filing: **01.12.83**

(51) Int. Cl.³: **C 02 F 3/12**
**C 02 F 3/06, C 02 F 3/20**

(30) Priority: **07.12.82 GB 8234787**
**25.01.83 GB 8301999**
**25.01.83 GB 8301998**

(43) Date of publication of application:
**27.06.84 Bulletin 84/26**

(84) Designated Contracting States:
**AT BE CH DE FR GB IT LI NL SE**

(71) Applicant: **WATER RESEARCH CENTRE**
**P.O. Box 16 Henley Road Medmenham**
**Marlow Buchinghamshire SL7 2HD(GB)**

(72) Inventor: **Boon, Arthur Godfrey**
**35 Franklins Road**
**Stevenage SG1 3BN(GB)**

(72) Inventor: **Cooper, Paul Frederick**
**10 Brook Close**
**Upper Caldecote Biggleswade SG18 9DW(GB)**

(72) Inventor: **Crabtree, Howard Ernest**
**18 Buchanan Road**
**Walsall WS4 2EN(GB)**

(72) Inventor: **Aldred, Roy Peter**
**41A Franche Road**
**Wolverley Kidderminster Worcs(GB)**

(72) Inventor: **Mucklow, Anthony Alan**
**51 Shakespeare Drive**
**Solihull, West Midlands(GB)**

(72) Inventor: **Running, John Law Byiers**
**95 Baldwin Road**
**Greenhill Kidderminster Worcs(GB)**

(72) Inventor: **Atkinson, Bernard**
**Little Mieders Borers Arms Road**
**Copthorne Crawley West Sussex RH10 3RJ(GB)**

(74) Representative: **Wain, Christopher Paul et al,**
**A.A. THORNTON & CO. Northumberland House 303-306**
**High Holborn**
**London WC1V 7LE(GB)**

(54) Aqueous liquid treatment process and apparatus.

(57) Method and apparatus for biologically treating aqueous liquids to digest biodegradable material therein, wherein the liquid is passed through a horizontal tank (1) containing porous bodies suspended therein supporting aerobic micro-organisms, and oxygen (e.g. air) bubbles are supplied in the liquid from diffusers (5) submerged in the tank, wherein the diffusers are so arranged as to impart to the liquid as it flows through the tank a vertical circulatory component of motion (B) whereby flotation of the porous bodies is decreased and more efficient use is made of the oxygen.

FIG. 4.

EP 0 112 095 A1

./...

Fig. 5.

- 1 -

"AQUEOUS LIQUID TREATMENT PROCESS AND APPARATUS"

This invention relates to a method and apparatus for the biological treatment of aqueous liquids by contact with micro-organisms, and relates particularly, but not exclusively, to biological fermentation processes and the treatment of aqueous effluents (such as sewage) by the activated-sludge process.

It is known to bring an aqueous liquid into contact with micro-organisms by passing the liquid through a vessel containing deformable porous bodies on which the micro-organisms are located and supported. U.K. patent specification no. 2006181A describes such a process (and apparatus therefor), in which the solids material comprises one or more bodies, each of which has substantial voidage within its internal structure and an extensive area of access from its outer surface to such voidage. By using biomass support bodies of this type, which may typically be reticulated polyether pads sized 25mm x 25mm x 10mm, it is possible to increase the concentration of bacteria in an activated sludge type process from about 4g dry matter per litre (as achieved in earlier methods) up to about 7 to 10g dry matter per litre. The extended surface of these particular bodies provides a relatively large specific surface for the growth of high concentrations of bacteria.

In the practice of the above process, the liquid to be treated is passed through an aerated tank containing a very large number (typically 40,000 pads/$m^3$) of the support bodies. The air provides the oxygen required by the bacteria growing in the bodies for oxidation of the organic and ammoniacal content of the waste water. The process has certain potential advantages over conventional activated sludge treatment processes because (i) it is possible to complete the treatment in a smaller tank as a result of the higher biomass concentrations that can be maintained, (ii) the process can produce a waste sludge of much higher concentration and hence there is a smaller volume of sludge to be wasted, thus saving on sludge treatment and disposal costs, and (iii) more of the oxygen, passed into the system as part of the air, can be used in the biological treatment process partly because the rate at which the air bubbles can rise through the liquid/support bodies mixture is reduced by the presence of the support bodies and partly because some of the air bubbles can actually enter within the reticulated bodies themselves.

It will be appreciated, therefore, that the support bodies described in U.K. specification no. 2006181A do provide a number of advantages so far as the biological reactions are concerned in aqueous liquid treatment processes. Their use does, however, in practice give rise to certain problems. For a variety of reasons, it is highly preferable in water treatment processes of this type that the solid micro-organism-supporting bodies should have a buoyancy such that they remain suspended in the water, i.e. they should neither sediment nor float to the surface. Bodies having such a buoyancy can be made in accordance with specification no. 2006181A and, in particular, the reticulated plastics bodies are especially suitable. (These are porous bodies of an apparently open weave structure and may be made by knitting mono-filaments and their structure resembles that of the familiar interlinked nylon domestic cleaning pads. Alternatively, the bodies can be reticulated sponges of a material similar to that used in loudspeaker construction.) Two problems in particular arise in the use of these support bodies, namely that under certain conditions they tend to accumulate in the liquid at the top of the tank (rather than remaining in suspension throughout the liquid) and, in association with that, the biomass within the bodies tends to be starved of oxygen and to behave anaerobically (which is undesirable since it leads to a reduction in process efficiency).

Another practical problem which arises is that, as the liquid to be treated flows through the tank from one end to the other, there is a tendency for the support bodies to be carried downstream towards the outlet end of the tank. As a result, the bodies are not evenly distributed throughout the length of the tank, which is undesirable. Also, their tendency to collect at the outlet end of the tank can cause difficulties at the outlet itself, e.g. by increasing the risk of clogging the filter screens adjacent the outlet.

We have investigated these various problems (which in practice greatly reduce the efficiency of the process) and have found that, to a large extent, they can be significantly reduced or overcome by specially positioning the diffuser(s) in the tank.

In accordance with the present invention, there is provided a method of biologically treating an aqueous liquid containing biodegradable material, which comprises passing the liquid through a tank in which are suspended a multiplicity of porous bodies supporting aerobic micro-organisms thereon, and supplying oxygen-containing gas bubbles from one or more diffusers in the tank; characterised in that there are at least two vertically extending zones formed in the tank, of which the or each first zone includes one or more diffusers providing rising gas bubbles therein, and the or each second zone is free of active diffusers, so that in its passage through the tank the liquid has a vertical circulatory component of motion imposed on it by being caused to rise with said bubbles in the or each first zone, and descend in the or each second zone, the liquid passing in said zones during its passage through the tank.

The invention also provides apparatus for biologically treating a liquid containing biodegradable material, which apparatus comprises a tank having a liquid inlet and a liquid outlet, and one or more gas diffusers located at or near the bottom of the tank for supplying oxygen (in use) to a liquid passing through the tank, characterised in that the diffuser or diffusers are so positioned as to provide (in use) in the tank at least one first vertically extending zone which includes at least one diffuser, and at least one vertically extending second zone which is devoid of active diffuser so that the liquid passing through the tank rises in the first zone(s) and falls in the second zone(s).

In order that the invention and the prior art can be more fully understood, reference will be made herein to the accompanying drawings, in which:

FIGURES 1,2 and 3 are schematic vertical sectional views of three tanks for the biological treatment of aqueous liquids, Figures 1 and 2 being prior art arrangements and Figure 3 illustrating one embodiment of the present invention;

FIGURE 4 is a schematic top plan view of a tank in accordance with the present invention;

FIGURE 5 is a schematic vertical section on the line A-A of Figure 4;

FIGURE 6 is an orthogonal partly cut away view of a second embodiment of tank in accordance with the invention;

FIGURE 7 is a section on the line A-A of Figure 6;

FIGURE 8 is a section (similar to Figure 6) of a third embodiment of tank of the invention;

FIGURE 9 is a schematic plan view of a fourth embodiment of tank of the invention;

FIGURE 10 is a section on the line A-A of Figure 9;

FIGURE 11 is a schematic vertical section of a fifth embodiment of tank in accordance with the invention; and

FIGURE 12 is a schematic vertical section of a sixth embodiment of tank in accordance with the invention.

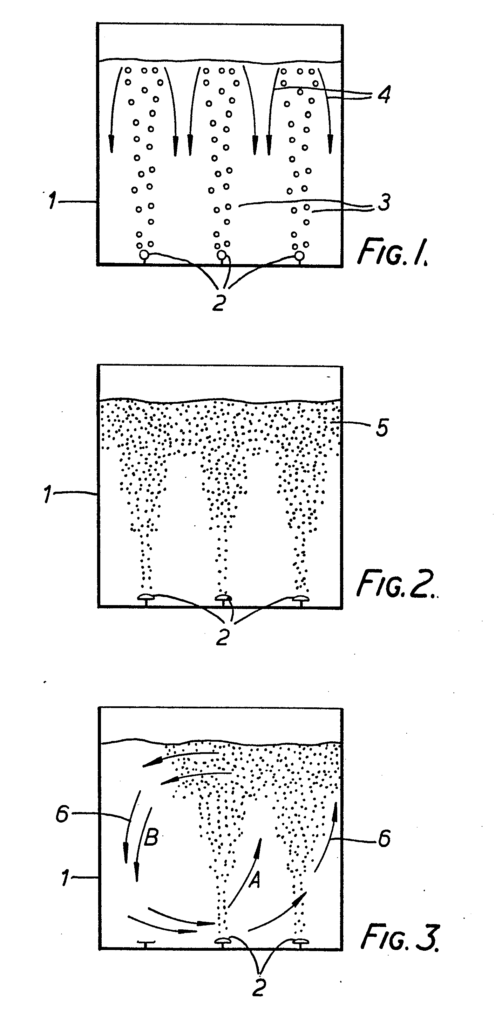

A first aspect of the invention, and its relation to the prior art, is illustrated in Figures 1 to 3 of the drawings. The problem of flotation of the porous bodies arises mainly when the liquid being treated is aerated using fine-bubble diffusers (i.e. the air bubbles are no greater than 0.5mm in diameter). It will be understood that, in principle, the liquid under treatment can be aerated with coarse bubbles or with fine bubbles. In the case of coarse-bubble diffusion, flotation problems are not usually so important.

Figure 1 of the accompanying drawings illustrates the liquid flow pattern in a tank (1) when coarse-bubble diffusers (2) are used. Coarse-bubble aeration from regularly spaced diffusers in the bottom of the tank usually creates rising columns (3) of (relatively) large bubbles which are counter-balanced by downward movement (or circulation) of adjacent liquid columns. We believe that the micro-organism-bearing bodies (not illustrated) tend to circulate with the liquid in the tank, i.e. to rise with the liquid-entrained bubbles and then to be carried downwards (arrows 4) with the downflow liquid, and hence the particles do not accumulate at the top of the tank. However, coarse-bubble diffusion is not as cost-effective as fine-bubble diffusion and, furthermore, when coarse-bubble diffusion is used, the biomass within the particles tends to be starved of oxygen and, hence, to be anaerobic.

In the case of conventionally arranged fine bubble diffusers, we have found that the same circulation is not achieved. Figure 2 of the accompanying drawings illustrates that, with conventional well-distributed diffusers (2) in a tank (1), a layer (5) of fine bubbles of air is formed across the vessel near the top, and this we believe prevents downward movement of the support bodies (not shown). As a result, a flotation effect arises in that the bodies are carried to the liquid surface and remain there. Oxygen starvation in the biomass also tends to occur. We have further found that the flotation effect is substantially unaffected by increasing the air flow. Thus, at air flows of up to and beyond twice the normal rate, flotation still occurs.

Since fine-bubble diffusion is a much more efficient way of transferring oxygen into solution than coarse-bubble diffusion, it would be highly advantageous if it were possible to use fine-bubble diffusion without encountering the flotation problem and the oxygen-starvation problem.

In accordance with one aspect of the present invention, this can be achieved by arranging the diffuser or diffusers so as to impart to the liquid flowing through the tank in a general direction from the inlet to the outlet, a vertical circulatory component of motion generally perpendicular to said general direction of flow. This is illustrated in Figure 3. In all of Figures 1 to 3, the general direction of liquid flow through the tank is perpendicular to the plane of the drawn section (i.e. it is into or out of the paper). Figure 3 shows a tank 1 which is the same as in Figure 2 except that the left-hand diffuser has been inactivated. As a result, there are two zones formed in the tank, namely a first zone A where rising gas bubbles lift the liquid, and a second zone B, essentially free from rising gas bubbles, in which the liquid descends. The vertical circulatory component of motion is indicated by the arrows 6.

This arrangement results in circulation of the liquid and entrained gaseous oxygen and porous particles (as indicated by the arrows), and the flotation effect of Fig. 2, resulting in a build-up of solids at or near the liquid

- 7 -

surface, is avoided. This renders the process very efficient. Furthermore, the air to liquid flow ratio required can be less than that required for coarse-bubble diffusers, and in one arrangement which we have tested, the air to liquid flow ratio was less than half the minimum needed for coarse-bubble diffusion.

This method of the invention is intended particularly for use with the reticulated support bodies described above. However, it may also with advantage be used with other porous support bodies which have a similar buoyancy and which are intended, in use, to be generally evenly dispersed in suspension in the liquid under treatment. Support bodies such as sand and the like are not used.

In this aspect of the invention, the amount of anaerobic digestion (i.e. oxygen starvation) in the biomass is substantially reduced or even eliminated. We believe the reason for this is that, as the support bodies move (circulate) in the vessel, they have a component of motion relative to the moving liquid, and as a result the aerated liquid flows through or permeates the bodies and thus keeps the biomass therein aerobic. We believe this effect occurs principally in the second zones where the bodies are in effect dragged downwards in the liquid/gas circulatory flow.

In general, in the method of the invention using the reticulated support bodies described, a substantial proportion of the volume of the vessel will be taken up by the support bodies, e.g. up to $\frac{1}{3}$rd of the vessel volume can be so occupied. Using pads 25mm x 25mm x 10mm, there will usually be from 20,000 to 40,000 pads/$m^3$ for example. In operation, the vessel appears relatively crowded with the support bodies and we estimate that any individual body may take up to several minutes to travel from the bottom of the vessel up to the liquid surface.

It is to be understood that, whilst we have referred to a downward flow in the second zone(s) and an upward flow in the first zone(s), it is intended only that such flows should generally predominate and not that they occur to the exclusion of any other flow. Indeed, such flows are superimposed on the general mass flow from inlet to outlet and in the case of diffusers arranged along one side half only of a tank, the resulting liquid flow will be generally helical.

In the method and apparatus of this aspect of the invention, the exact arrangement (i.e. disposition) of the diffuser(s) in the vessel can vary widely provided that, in operation, the flotation effect (accumulation of solids at the top of the tank) is avoided. Thus, in some systems, it may be sufficient to have a single diffuser located off-centre of the bottom of the vessel. In other systems, several diffusers may be present, arranged in a single group or arranged in two or more groups so as to provide two or more "first zones" in the vessel. Likewise, there may be two or more "second zones" in the vessel. Usually, the first zone(s) will not occupy more than 50% of the volume of the vessel or tank.

The concept of having highly oxygenated first zones and diffuser-free second zones runs contrary to prior art proposals, where it was thought that it was very important to distribute the oxygen bubbles as uniformly as possible in the vessel. Whilst prima facie that is clearly desirable, we have found that the resulting flotation problem can be overcome by using the different arrangement of the present invention without any substantial sacrifice in the overall efficiency of the process.

Whilst the method and apparatus of this aspect of the invention are especially suited to processes in which flotation of the solids particles will occur to a significant extent, they may be used in processes where flotation is not a significant problem, e.g. where the micro-organism-bearing solid bodies are too heavy or otherwise not subject

- 9 -

to flotation.

As will be understood, processes of the type with which the invention is concerned have a number of uses including, for example, treatment of sewage and other aqueous wastes and effluents, and also in certain fermentation production processes (e.g. in the pharmaceutical and brewing industries).

A second aspect of the invention is particularly designed to cope with the problem of uneven distribution of support bodies from inlet to outlet of the tank. This aspect of the invention is characterised in that said diffuser or diffusers are so positioned that said vertical circulatory component of motion is generally parallel to the local direction between the inlet and the outlet.

In this aspect of the invention, coarse bubble (>5mm) diffusers can be used, but it is much preferred to use fine bubble diffusers. The oxygen is preferably supplied in the form of air.

There are various ways in which the diffusers can be arranged to provide the desired circulatory motion. We prefer to position the diffusers in an array or group extending from the tank inlet, part of the way towards the outlet, there being a region at the outlet which is free of diffusers. For example, in a horizontal square section tank, the diffusers may extend across the tank and a distance of about half to two-thirds of the length of the tank from the inlet end. The remaining one-third of the length (length means the distance from inlet to outlet) is free of diffusers. This arrangement creates a circulatory motion of the suspended bodies: they tend to rise with the air bubbles and move towards the outlet end of the tank with the liquid flow, and then in the region where there are no diffusers, they are carried downwards and generally back towards the inlet end of the tank. In this arrangement, the circulatory motion is assisted by the natural liquid flow through the tank from inlet to outlet. It is equally possible, although less preferred, to have the opposite arrangement, i.e. to have the diffusers at the outlet end of the tank, and to provide a diffuser-free zone at the inlet end. In this case, the circulatory motion so induced runs contrary (in the surface regions) to the natural liquid flow. This arrangement is usually less effective but it has an additional advantage referred to hereinafter.

The circulatory motion is generally vertical, i.e. the bodies tend to rise vertically (with the air bubbles) and to be carried in the upper liquid regions generally between the inlet and the outlet (the direction depending on the disposition of the diffusers as described above), and then to be carried downwards to return in the lower regions of the tank to complete the circulatory path. This circulatory motion may be contrasted with, for example, swirling motion in a generally horizontal plane which cannot be induced (to any significant extent) by mere arrangement of fine bubble diffusers. It may also be contrasted with the circulatory motion of the first aspect of the invention, which motion is generally vertical but which is in a direction at right angles to the inlet-to-outlet direction, i.e. which is across the tank.

The effect of the circulatory motion of the second aspect of the invention is to maintain, or reduce the tendency to lose, an even distribution of the buoyant support bodies lengthwise of the tank. This achievement is reflected by increased efficiency in the overall process.

When a rectangular (or generally rectangular) tank is used, we prefer it to be of square horizontal section, for example from 3 to 10 metres square and of a depth from 3 to 5 metres. These figures are merely by way of example: other sizes can be used. Non-square rectangular tanks can be used but care has to be taken. Tanks with length/width ratios of up to about 5/1 are generally satisfactory, but higher ratios (greater lengths to width) can present problems. The reason is that with such elongate tanks, the energy of the liquid flow through the tank can be too great to be significantly influenced by the low energy bubble-induced circulatory motion.

There is no theoretical limit on the width of a tank of given length, but in practice there are limitations. For example, as is well known, the support bodies are continuously extracted from the tank for the removal of excess biomass, the bodies then being preferably returned to the tank. In tanks of inordinate width, it would be extremely difficult to ensure removal of biomass-saturated bodies and this would present problems.

In the method and apparatus of this aspect of the invention, the support bodies will normally be removed from the tank for cleaning, as referred to above. Advantageously, the bodies are removed from the liquid near the surface at the inlet end of the tank and returned to the surface at about one half to two thirds of the length from the inlet end. In this way, the "cleaned" bodies would be submerged rapidly in the down-flowing liquid before they had an opportunity to dry out or float. This arrangement is suitable where the diffusers are at the inlet end of the tank. The opposite would be the case when the diffusers were arranged in the outlet half of the tank.

It is not essential to use rectangular tanks. Generally circular tanks can, for example, be used in both aspects of the invention, with liquid flow from the periphery radially towards the centre where an outlet can be provided. Flow from the centre to the periphery is possible but presents some problems. With a circular tank, the diffusers may, for example, in the second aspect of the invention, be in annular banks extending from the outer wall radially inwardly but stopping short of the central outlet. There will thus be an annular region around the outlet which is free of diffusers. The circulatory motion will then be generally vertical along radial lines from the outside of the tank to the centre.

Advantageously, in both aspects of the invention, a further circulatory motion can be superimposed on that due to the air bubbles, in that the inlet to the circular tank can be arranged tangentially so as to impart a horizontal component of circulation to the bodies. The advantage of this is that, in this way, the inlet water is swept around the tank which assists in the even distribution of the support bodies. The circulatory motion due to the air bubbles thus has applied to it a horizontal circulation.

In the use of circular tanks, the bodies would be removed (for cleaning) from the outer regions of the tank and returned to the radially inner regions.

We have found, in dealing with the general problem of preventing a build-up of support bodies around the outlet, that it is very much to be preferred to minimise the effect of water flow from the inlet to the outlet. According to a preferred feature of the invention, we have found that this can be achieved by modifying conventional liquid inlet arrangements. For example, using a rectangular tank, we prefer to have an inlet extending across the total width of the tank whereby the water entry velocity is very much less than would be the case if the same volume of water was supplied through a single orifice. In one preferred arrangement, an overflow weir is provided.

Another way of reducing the water flow effect is to introduce the water in a direction across the tank e.g. at 90° to the direction of water flow to the outlet.

The effect of water flow can also, we have found, be advantageously reduced by modifying conventional outlet arrangements. The usual outlet from tanks used as described comprises a hole in the wall of the tank, or a short overflow weir. In both cases, a metal screen will normally be provided to prevent the support bodies flowing out of the tank with the treated liquid. According to a further aspect of the present invention, we have recognised that such arrangements cause localised increases in water flow rates, which in turn contribute to localised uneven support body distribution and to blocking of the filter screen. We have found that these problems can be overcome or reduced by providing in front of (i.e. upstream of) the outlet, a screen which is of substantially greater area than the outlet. For example, the screen area may advantageously be at least five times the outlet area. Thus, in the case of a rectangular tank, the screen preferably extends across the full width of the tank, and from above the liquid level down to the bottom of the tank.

In addition to providing a screen, it is also advantageous to have a relatively large outlet e.g. a weir extending the full width of a rectangular tank, which again reduces the local liquid flow rate. In the case of a weir or the like outlet, the area of the outlet is taken to be the cross-sectional area of the liquid flow as it passes over the weir.

The screen may be made of any suitable material, e.g. metal or rigid plastic, but we prefer to use metal of the wedge-wire or similar material type. Preferably, in the region of the liquid surface, the screen is angled (at, say, 45°) in the downstream direction. In order to assist in keeping the angled section of the screen clear of debris, we prefer to provide a coarse bubble diffuser, between the screen and the outlet wall of the tank, the bubbles from which rise through the liquid and through the angled part of the screen. This effects an air-scour of the top of the screen.

Screens as described are easy to keep clean and clear of debris. There is only a small head-loss across the screen and this will vary only slightly with increases in flow rate of the waste water through the plant.

It is preferred that the screen extend to substantially the full depth of the tank (although lesser depths may suffice) since the larger the area of the screen, the greater generally is the effect of minimising the water flow velocity, and hence reducing the uneven distribution of suspended bodies. Likewise, it is preferred (but not essential) for the screen to extend fully from one side of the tank to the other.

The screen may suitably be spaced about 150 to 250mm from the outlet end wall of the tank (this distance is not critical), and may suitably be bolted to the side walls of the tank. The gap between the bars of the screen should be about 2 to 4mm when the sponge-like support bodies sized 25mm x 25mm x 10mm are used. The air sparge may suitable be from about 0.1 to 0.5m below the liquid surface. As an example, the pipe could be 50 to 100mm diameter, extending the full width of the tank, with small holes (e.g. 2 to 4mm diameter) drilled along its length at about 20mm centres to produce course (>5mm) air bubbles.

In both aspects of the invention (i.e. vertical circulatory motion perpendicular to, and parallel with, the liquid mass flow direction), we have found that it is highly advantageous to provide, between first and second zones, a baffle member which is spaced from the bottom of the tank and from the liquid surface. The liquid thus rises in the first zone, passes over the baffle to descend in the second zone and return under the baffle to rise again in the first zone. The baffle provides a number of advantages. Firstly, it provides a barrier between the two zones, thus enabling the second zone to be more quiescent which we have found to be of advantage. Secondly, the presence of the baffle promote the uplift pumping effect in the first zone, which again is of advantage. Furthermore, the presence of the baffle promotes closer packing of the porous support bodies at the bottom of the second zone which, again, improves the efficiency of the process. The baffle may be a solid panel, or a wire grid, or a series of overlapping members, as desired. It may stand on the bottom of the tank and include one or more cut-out portions to allow the liquid and solids to pass therethrough at the bottom (and top) of the tank as necessary. In the first aspect of the invention, the baffle will normally extend generally parallel to the inlet-to-outlet direction, whereas in the second aspect of the invention it will normally extend generally perpendicular to the inlet-to-outlet direction.

The second aspect of the invention prevents or reduces the tendency for uneven distribution of the porous support bodies in the tank (in the direction of inlet-to-outlet). If desired, this tendency can further be reduced, in accordance with a preferred feature of the invention, by periodically or continuously, returning bodies from the region of the outlet to the region of the inlet to even out the distribution of the bodies between the inlet and the outlet of the tank.

There are various ways in which this preferred feature may be practised. For example, one or more return pipes may be provided in the tank, extending from the outlet end to the inlet end of the tank, and liquid/solids suspension from the outlet end of the tank can be drawn along the pipe(s) to the inlet end of the tank. Alternatively, liquid/solids suspension from the outlet end of the tank can be withdrawn from the tank, and returned to the tank at the inlet end. For example, the suspension can be drawn along a return pipe which dips into the outlet region of the tank, and transferred in the pipe externally of the tank to be delivered to the inlet region of the tank.

As is known, it is usual in liquid treatment processes of this type, to remove the micro-organism support bodies from the tank to "clean" them, i.e. to remove excess biomass. The bodies are then returned to the tank. In one preferred arrangement of the present invention, the return flow of liquid/solids suspension can be utilised as the feedstock to the "cleaning" unit, and the "cleaned" support bodies returned to the inlet region of the tank. Alternatively, if the intake for the "cleaner" unit is disposed at the inlet region of the tank, then the return flow of ("uncleaned") support bodies from the outlet region may be discharged adjacent the cleaner intake if desired. It is to be understood that whilst the return flow of the present invention can be associated with "cleaning" of the support bodies, this is not essential. The return flow can equally be arranged and operated quite independently of any "cleaner" unit.

In a preferred aspect of the invention, the support bodies utilised are the polyether (or like material) pads previously described. It is important that any pumping of suspensions of these bodies should not subject them to shear (unless they are simultaneously being "cleaned", when some shear may be used). To avoid shear, we prefer to use cone pumps or suction head systems to cause the return flow of the suspension. Another possibility is the use of air-lift, i.e. to cause the suspension to flow up an upwardly inclined pipe by introducing air bubbles into the lower end of the pipe.

The most important factor contributing to the build-up of solids bodies at the outlet region of the tank is the liquid flow through the tank. We prefer, therefore, in addition to employing the return flow technique of the present invention, to take steps to minimise the liquid-flow effect. For example, we prefer to modify conventional inlet arrangements. Where the inlet is simply a port in the end wall of the tank, the port facing directly into the tank towards the outlet end, we prefer to place a baffle or the like in the tank, immediately downstream of the port, to deflect the incoming liquid and thus reduce the localised flow towards the outlet. Alternatively, the inlet port can be so positioned, e.g. in a side wall of the tank, that the incoming liquid flows into the tank in a direction perpendicular to the general direction of liquid flow to the outlet (as described above).

Whilst we have described the invention with reference to first and second aspects, it is to be understood that the diffuser(s) can be so arranged to be intermediate the positions described in the first and second aspects of the invention, e.g. to be in an array which is at an angle of $45^{\circ}$ (or any other angle) to the direction from inlet to outlet of the tank.

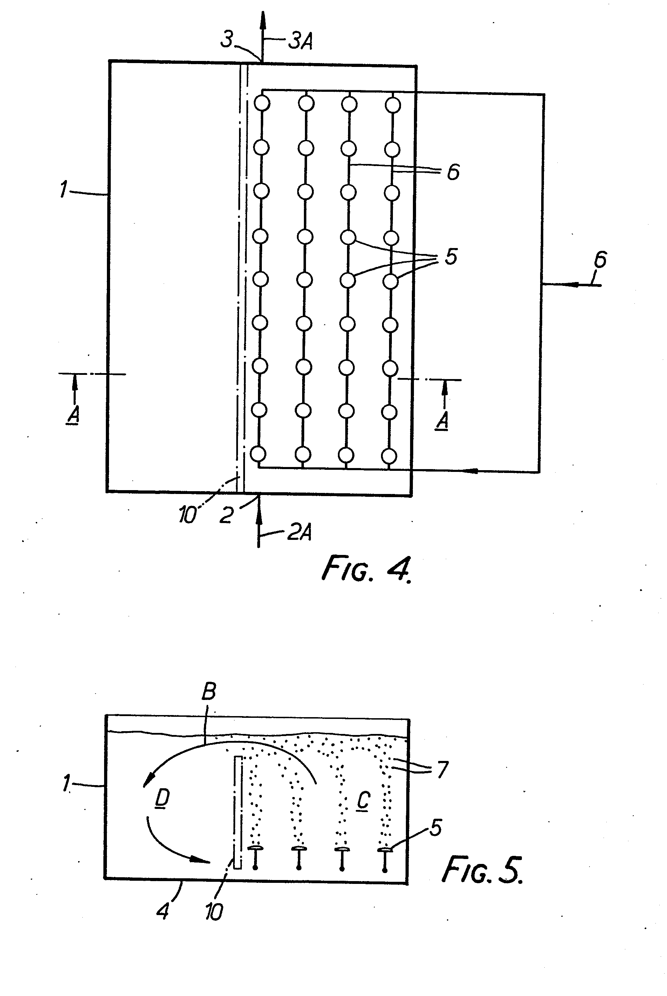

In order that the first and second aspects of the invention may be more fully understood, together with various preferred features, reference will now be made to Figures 4 to 10 of the drawings which illustrate the invention by way of example only.

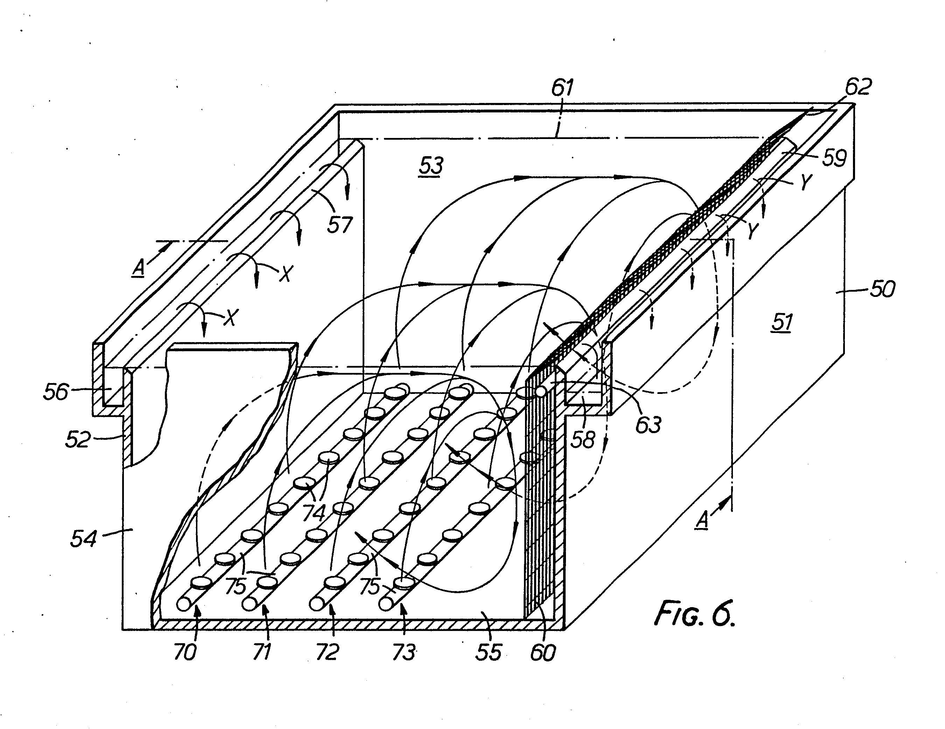

Figures 4 and 5 illustrate the first aspect of the invention and show an elognate rectangular tank 1 having a liquid inlet 2 (supplied by pipe 2A) at one end, and a treated liquid outlet 3 (and outflow pipe 3A) at the other end. Down one side half (the right-hand half as illustrated) of the tank 1 is a group of fine bubble diffusers 5 linked by compressed air supply lines 6 to a source of compressed air (not shown).

In operation, liquid to be treated flows into tank 1 at inlet 2 and passes through the tank to outlet 3. Air is supplied to the diffusers. Suspended in the liquid in the tank are a multiplicity of small reticulated sponge pads (not shown) carrying aerobic micro-organisms thereon. The liquid in the tank is closely packed with these pads. Liquid in the right hand side of the tank has fine air bubbles 7 rising therethrough. As a result, the liquid (and the pads suspended therein) are raised. The volume of the tank filled with rising air bubbles constitutes the first zone C. As the liquid rises it tends to move in a circulatory motion to the left in Figure 5 (arrow B) into the left hand side of the tank 1 which is a quiescent second zone D. Here, the liquid (and pads) descend and return across the lower regions of the tank to zone C.

This vertical circulatory component of motion induced by the asymmetric disposition in the tank of the diffusers, is generally at right angles to the inlet-outlet direction (i.e. to the longitudinal axial direction of the tank). This component of motion is superimposed on the general liquid mass flow from inlet to outlet, resulting in the liquid following a generally helical path in its passage through the tank. That is to say, as it rises in zone C and descends in zone D, it also travels forwardly towards the outlet 3.

The extent to which the motion towards the outlet will predominate over the transverse circulatory motion depends on the precise operating conditions.

The method is particularly useful for the treatment of sewage.

If desired, a baffle 10 (shown in discontinuous lines) may be provided extending longitudinally of the tank as previously described.

As is conventional, the porous bodies can be removed from tank 1 and after cleaning to remove any excess biomass, returned to the tank.

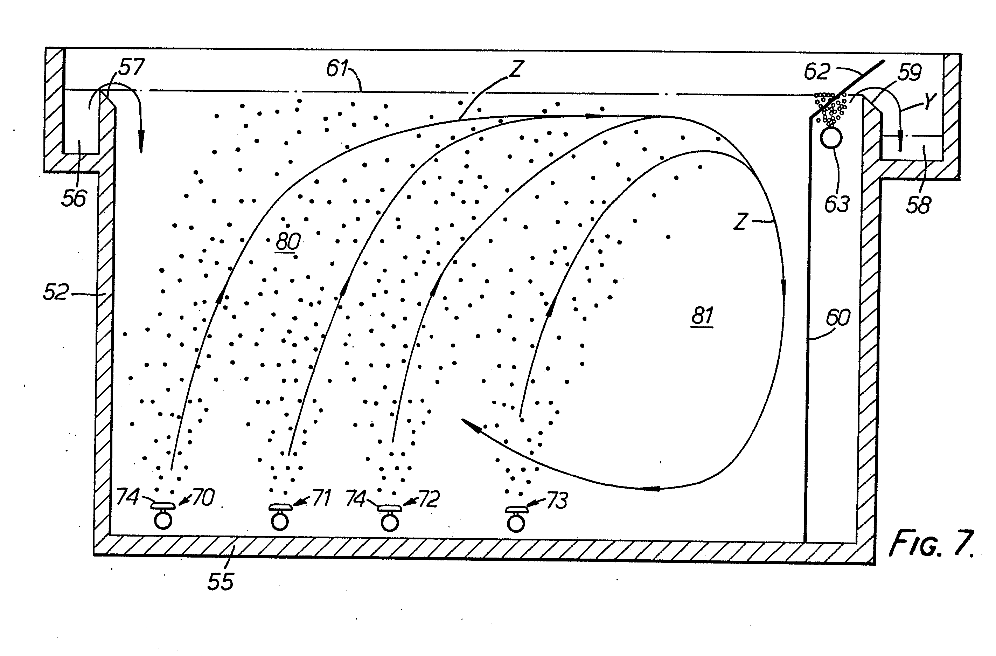

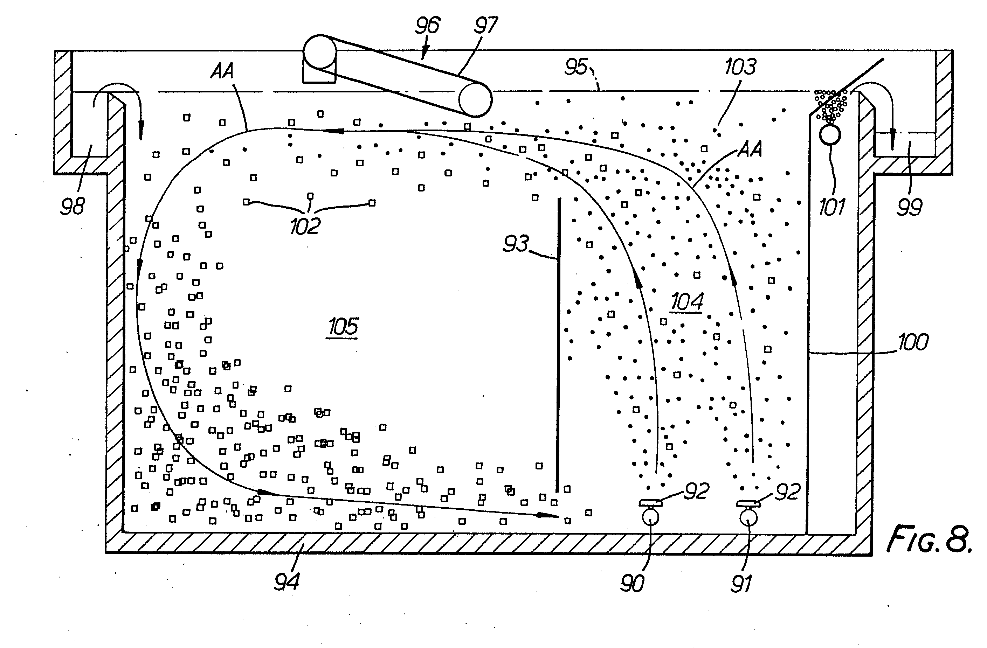

Figures 6 to 10 illustrate various embodiments of the second aspect of the invention. Figures 6 and 7 show a square tank 50 having opposed end walls 51,52, opposed side walls 53,54, and a bottom 55. A feed trough 56 is provided along the top of wall 52, the top edge 57 of wall 52 acting as a weir for entry of liquid to be treated (arrows X). Opposite end wall 51 includes a similar trough 58, the top 59 of wall 51 acting as a weir, for exit of treated liquid from tank 50 (arrows Y). Liquid is fed into trough 56 at one end thereof (not shown) and treated liquid is withdrawn from trough 58 at one end thereof (not shown). The mass flow of liquid through the tank is thus from end 52 towards end 51.

Upstream of end 51 and parallel therewith is an upstanding wedge-wise screen 60 extending the full width of the tank, and from the bottom 55 upwards to above liquid level 61. Screen 60 allows liquid therethrough but not the foam pads (hereinafter described) suspended in the liquid. At its top, the screen 60 includes an angled portion 62 extending towards and over top edge 59 of end wall 51. Between screen 60 and end wall 51 is a coarse bubble aerator 63 in the form of an elongate pipe extending horizontally parallel to end wall 51 and containing a number of drilled holes (not shown) to emit coarse bubbles of air. The pipe is connected to a pressurised air supply (not shown), and is located slightly below water level 61.

Extending across the bottom 55 of tank 50 are four rows 70,71,72,73 of fine bubble diffusers 74. Each row is parallel to end wall 52, the first row 70 being close to wall 52 and the last row 73 being about half to two-thirds along the bottom 55 of the tank 50. The rows each comprise a compressed air supply line 75 connected to a source (not shown) of compressed air (or oxygen).

In use of the apparatus, the tank contains a multiplicity of small reticulated sponge pads or the like (not shown) on which are supported aerobic micro-organisms to aerobically digest the biodegradable material in the feed liquid. These pads are of a buoyancy to be suspended in the liquid, and whilst the tank is closely packed with the pads, the individual pads nevertheless have a degree of movement in the tank. As liquid is treated, biomass builds up on and in the pads, and the pads are removed continuously or periodically for cleaning and return to the tank. The removal and cleaning means are omitted from Figures 6 and 7 in the interests of clarity.

Fine gas bubbles rise from the diffusers 70 to form in the tank a first zone 80 (Figure 7). This zone extends for the full depth and width of liquid in the tank and for a distance from end wall 52 to just downstream of diffuser row 73. It is filled with rising gas bubbles. Downstream of row 73, i.e. between row 73 and screen 60, is a second zone 81, in which there are substantially no rising air bubbles. The zone is thus quiescent. Arrows Z in Figure 8 illustrate the components of motion superimposed on the general mass liquid flow by this distribution of diffusers. The flow is generally upwardly and forwardly in zone 80 and downwardly and then rearwardly in zone 81.

This flow tends to prevent or reduce flotation, and also improves the utilisation of the oxygen. Furthermore, it also reduces the tendency of screen 60 to jam with the foam pads.

Downstream of screen 60, the coarse bubble aerator 63 provides air bubbles to scour the angled screen portion 62 to keep it from jamming, or becoming over-crowded, with foam pads and solid debris.

The embodiment of Figure 8 is very similar to that of Figures 6 and 7 except as follows:

(a)  There are only two rows 90,91 of diffusers 92, and these are at the outlet region of the tank rather than at the inlet region in Figures 6 and 7.

(b)  A baffle 93 is provided extending transversely of the tank and spaced from the bottom 94 of the tank and from the liquid level 95.

(c)  An arrangement 96 for removing foam pads is shown, comprising a conveyor 97 or the like to feed the pads to a cleaner (not shown).

Figure 8 includes an inlet trough 98 and outlet trough 99, screen 100 and coarse bubble diffuser 101 all as in Figures 6 and 7. The tiny squares 102 in Figure 8 show foam pads (only a few are shown) and the tiny circles 103 (as in all the Figures) are air bubbles.

As can be seen, the arrangement of diffusers in Figure 8 is the opposite way round from Figure 6. Again, two zones are formed. A first zone 104 is formed over the diffusers 92 and is defined by baffle 93, screen 100, water level 95 and the bottom 94 of the tank. A second zone 105 is formed between the inlet end of the tank and baffle 93, and the bottom 94 of the tank and the water level 95. Both zones extend across the full width of the tank.

Arrows AA indicate the component of motion given to the liquid (and pads) by this arrangement of diffusers 92. As can be seen, this component of motion is upwards in zone 104 and rearwardly (counterflow) into zone 105 where the motion is downwardly and then forwardly under baffle 93. Zone 105 is quiescent. This arrangement not only leads to excellent utilisation of the oxygen, but also promotes an even distribution of foam pads throughout the length of the tank, and furthermore keeps screen 100 clear of jamming from pads 102.

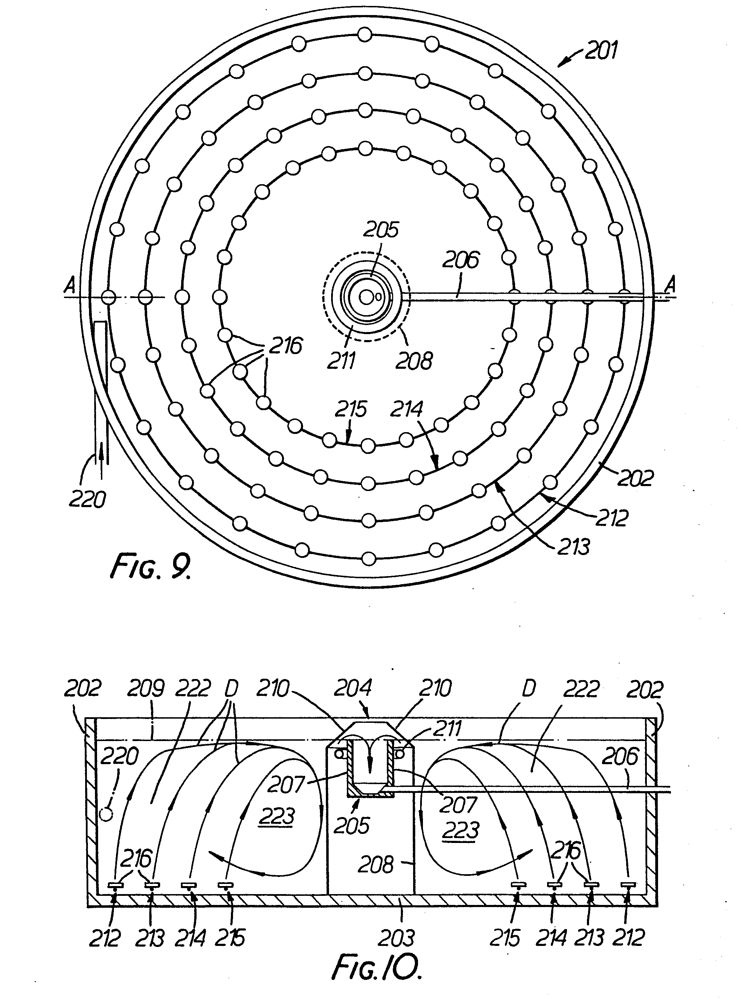

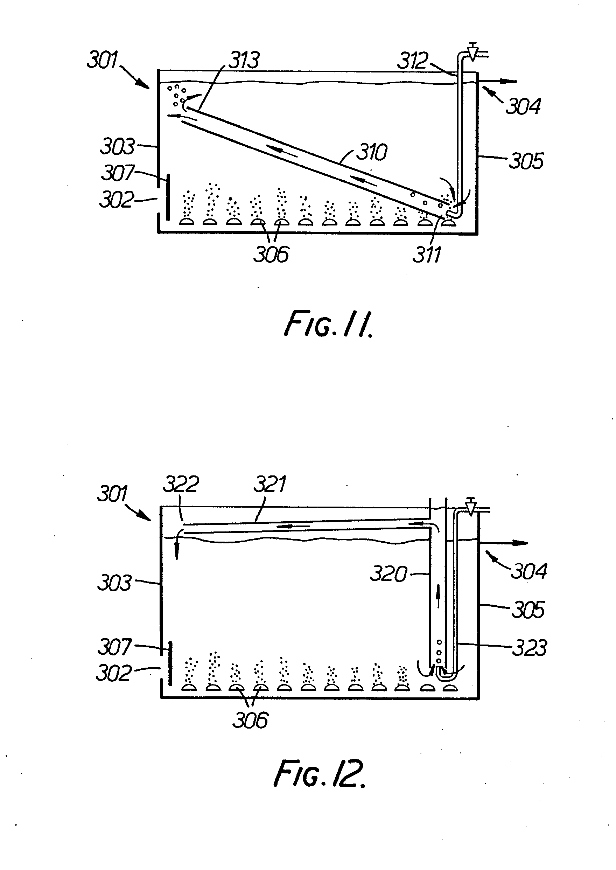

Figures 9 and 10 illustrate a circular tank 201 having a side wall 202 and bottom 203. Centrally disposed in the tank is an outlet 204 comprising a cylindrical outlet vessel 205 connected to an outlet pipe 206 extending out of the tank. Walls 207 of vessel 205 form a weir. Surrounding vessel 205 is a screen 208 extending from the bottom 203 of the tank to above the liquid level 209, the screen having an inwardly angled portion 210 at the liquid level. An annular coarse air bubble diffuser 211 is positioned just below liquid level between the screen 208 and vessel 205.

On the bottom 203 of tank 201 are four concentric circular arrays 212,213,214,215 of fine bubble diffusers 216. The outermost array 212 is close to side wall 202 and the innermost array is spaced inwardly of wall 202 by about half the radius of tank 201. As previously described, each array of diffusers includes a compressed air supply pipe 217 connected to a source (not shown) of compressed air.

Coarse bubble diffuser 211 is also connected to a source of compressed air.

Tank 201 also includes a liquid inlet pipe 220 arranged to supply liquid essentially tangentially to wall 202.

In operation, the tank (between wall 202 and screen 208) is filled with foam pads as previously described, which are suspended in the liquid being treated. The liquid flow is essentially from the wall 2 radially inwards to the central outlet vessel 205. The screen 208,210, weir walls 207 and diffuser 211 operate as previously described with reference to Figures 6 to 8.

Fine air bubbles rise from the diffusers 216, creating a first zone 222 in the radially outer reigon of the vessel over the diffusers. Inwardly of first zone 222 is a second zone 223, which is devoid of diffusers. The component of motion imparted to the liquid by the arrangement of diffusers is shown by the arrows D in Figure 10, and is generally upwardly and radially inwardly in zone 222 and downwardly and radially outwardly in zone 223.

In Figures 11 and 12, like numerals indicate like parts in the drawings. A rectangular tank 301 has an inlet port 302 in an end wall 303, and an outlet 304 (not detailed) in the opposite end wall 305. The liquid to be treated enters the tank at port 302 and passes through the tank to the outlet 304. The tank contains a multiplicity of support bodies for aerobic micro-organisms, which are suspended in the liquid as it flows through the tank. The support bodies are not shown but are as previously described, e.g. reticulated foam pads. The tank has a plurality of fine bubble air diffusers 306 at the bottom thereof which extend the length of the tank but on one side only (see Figures 4 and 5 for example). In the tank 301, in front of the inlet port 302, is mounted a baffle 307 to deflect the incoming liquid so that, temporarily, it flows in directions perpendicular to the axial length of the tank.

In the arrangement of Figure 11, return flow of the liquid/solids suspension from the outlet region (i.e. that region of the tank at the outlet end) to the inlet region is achieved through an inclined pipe 310, the lower end 311 of which is at the outlet region of tank 301. An air supply line 312 is provided to inject air bubbles (preferably fine air bubbles) into end 311 of pipe 310. The bubbles rise and thus travel up pipe 310 to its upper end 313, where they exit and pass out of the liquid in the tank. This air bubble flow entrains the suspension to travel also up the pipe 310 to exit at end 313 in the inlet region of the tank. This return flow can be intermittent or continuous as desired.

In the arrangement of Figure 12, the return flow is achieved slightly differently. Here, a vertical riser pipe 320 is provided at the outlet region of tank 301. Pipe 320 has, externally of tank 301, a side arm pipe 321 which extends over the tank to terminate at end 322 over the inlet region of the tank. Pipe 321 is inclined downwardly towards its end 322 to permit gravity flow therefrom. An air supply line 323 extends to the foot of riser 320 and air bubbles injected into riser 320 travel upwardly carrying liquid/solids suspension therewith. The suspension then travels down side arm 321 to exit from end 322 and fall into the inlet region of tank 301.

The amount of return flow necessary to even out the distribution of the solid supports lengthwise (i.e. from inlet to outlet) of the tank will depend on the overall operating conditions. It may in some cases be sufficient to operate the return flow intermittently. In other cases, continuous return flow may be necessary. The rate of flow can also be adjusted to provide the desired effect. The return flow balances the undesirable effect of the liquid flow, i.e. that of causing a greater population of support bodies at the outlet region of the tank than at the inlet region. When the diffusers are arranged in accordance with the second aspect of the present invention, the return flow arrangements of Figures 11 and 12 may not be necessary.

For simplicity, Figures 11 and 12 omit certain preferred features of the invention such as the screen and weir outflow arrangements.

As previously stated, the air riser pipes 310 and 320 may advantageously deliver the biomass-loaded pads (or other porous solids) from the outlet end of the tank to a pad cleaner, whereafter the cleaned pads are returned to the inlet end of the tank. This is a preferred arrangement because, in this way, the most heavily loaded pads (which are those most in need of cleaning) are passed to the cleaner, the air-lift arrangement greatly facilitating this procedure.

CLAIMS:

1.      A method of biologically treating an aqueous liquid containing biodegradable material, which comprises passing the liquid through a tank (1;50) in which are suspended a multiplicity of porous bodies (102) supporting aerobic micro-organisms thereon, and supplying oxygen-containing gas bubbles (103) from one or more diffusers (2;70;92;216;306) in the tank;
characterised in that:
there are at least two vertically extending zones formed in the tank, of which the or each first zone (A;C;80;104; 222) includes one or more diffusers providing rising gas bubbles therein, and the or each second zone (B;D;81;105; 223) is free of active diffusers, so that in its passage through the tank the liquid has a vertical circulatory component of motion imposed on it by being caused to rise with said bubbles in the or each first zone, and descend in the or each second zone, the liquid passing in said zones during its passage through the tank.

2.      A method according to claim 1, wherein the liquid to be treated enters the tank at an inlet (2,56;98;220;302) and treated liquid leaves the tank at an outlet (3;58;99; 205;304);
characterised in that:
said diffuser or diffusers are so positioned that said vertical circulatory component of motion is generally perpendicular to the local direction between the inlet and the outlet (Figures 5,11,12).

3.        A method according to claim 2, wherein the inlet and outlet are at opposed ends of a tank and the general mass flow of liquid through the tank is in a direction from the inlet to the outlet; characterised in that: a plurality of diffusers are arrayed  (Figures 4,5,11,12) in a group extending generally in said direction but being in one half only of the tank, whereby said superimposition of said vertical circulatory component of motion upon the said general mass flow results in the liquid following a generally helical path in its flow through the tank.

4.        A method according to claim 1,2 or 3, wherein said diffusers are fine bubble diffusers; characterised in that: said first zone(s) cover no more than 50% of the area of the tank.

5.        A method according to claim 1, wherein the liquid to be treated enters the tank at an inlet and treated liquid leaves the tank at an outlet; characterised in that: said diffuser or diffusers are so positioned (Figures 6,7, 8,9,10) that said vertical circulatory component of motion is generally parallel to the local direction between the inlet and the outlet.

6.        A method according to claim 5, characterised in that:  the diffuser or diffusers are so positioned as to provide either a first or a second zone at the inlet, and either a second zone or a first zone, respectively, at the outlet.

7.      A method according to claim 6, characterised in that:  said tank comprises only one first zone and only one second zone, and wherein said first zone includes a plurality of diffusers arranged in a group.

8.      A method according to any preceding claim, characterised in that; the tank includes at least one submerged baffle (10,93) disposed between a first zone (C; 104) and a second zone (D;105) and spaced from the bottom (4,94) of the tank and from the liquid surface (95) whereby liquid rising in the first zone passes over the baffle to descend in the second zone and return to the first zone by passage under the baffle.

9.      A method according to any preceding claim, wherein the tank includes an outlet for treated liquid, and a screen (60,100,208) mounted upstream of the outlet to prevent said porous bodies reaching the outlet; characterised in that: said screen extends over a substantially greater area than the outlet.

10.      A method according to claim 9, characterised in that:  in the region of the liquid surface the screen is angled (62;210) in the downstream direction.

11.      A method according to claim 10, characterised in that:  a coarse bubble diffuser (63,101,211) is located downstream of the screen to provide rising gas bubbles which scour the angled portion of the screen.

12.    A method according to any preceding claim, characterised in that:  liquid to be treated is fed into said tank in a direction at approximately 90$^{\circ}$ to the direction of mass flow of liquid through the tank (Figures 9,10,11,12).

13.    A method according to any preceding claim, characterised in that:  said porous bodies are returned from the outlet region of the tank to the inlet region to even out the distribution of said bodies in the tank (Figures 11,12).

14.    A method according to claim 13, characterised in that:  said bodies are returned by an air-lift pipe (310) inclined upwardly from the outlet region to the inlet region of the tank.

15.    Apparatus for biologically treating a liquid containing biodegradable material, which apparatus comprises a tank (1;50;201;301) having a liquid inlet (2;56;98;220;302) and a liquid outlet (3;58;99;205;304), and one or more gas diffusers (2;70;92;216;306) located at or near the bottom (4;55;94;203;306) of the tank for supplying oxygen (in use) to a liquid passing through the tank, characterised in that:  the diffuser or diffusers are so positioned as to provide (in use) in the tank at least one first vertically extending zone (A;C;80;104;222) which includes at least one diffuser, and at least one vertically extending second zone (B;D;81;105;223) which is devoid of active diffuser so that the liquid passing through the tank rises in the first zone(s) and falls in the second zone(s).

16.    Apparatus according to claim 15, which includes a plurality of diffusers, characterised in that: said diffusers are positioned as a group extending over only a part of the bottom of the vessel, to form there-above a first zone, the remainder of the bottom of the vessel being free from active diffusers and forming there-above a second zone.

17.    Apparatus according to claim 16, wherein said tank has its liquid inlet at one end and its liquid outlet at the other end;  characterised in that: said group of diffusers is positioned to extend generally from said one end to said other end and from one side of the tank to no more than half way across the tank (Figures 3,4,5,11,12).

18.    Apparatus according to claim 16, characterised in that:  said group of diffusers is positioned at either the inlet region or the outlet region of the tank to form thereat a first zone, and conversely said second zone is at the outlet region or the inlet region, respectively, of the tank (Figures 6,7,8,9,10).

19.    Apparatus according to any of claims  15 to 18, characterised in that:  said tank includes at least one generally vertical baffle (10;93) which is spaced from the bottom of the tank and (in use) from  the liquid surface, and which extends between a first zone and a second zone.

20.    Apparatus according to  any  of claims 15 to 19, characterised in that:  the tank includes a screen (60;100; 208), mounted upstream of the outlet, and extending over a substantially greater area than the outlet to substantially prevent (in use) porous bodies suspended in the liquid reaching the outlet.

21.     Apparatus according to claim 20, characterised in that:  in the region of the liquid level (in use) in the tank, said screen is angled towards the outlet and, preferably, a gas diffuser is provided downstream of the screen to provide a gas scour of the angled portion of the screen.

22.     Apparatus according to any of claims 15 to 21, characterised in that:  means are provided to maintain (in use) an even distribution of porous solid bodies suspended in the liquid in the tank, said means including provision (312,310) for returning said bodies from the outlet region of the tank to the inlet region.

FIG. 1.

FIG. 2.

FIG. 3.

0112095

FIG. 4.

FIG. 5.

0112095

Fig. 6.

FIG. 7.

FIG. 8.

FIG. 9.

FIG. 10.

7/7

FIG. 11.

FIG. 12.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 071 591 (A.L. THOLIN) <br><br> * page 1, column 2, line 49 - page 2, column 1, line 10; page 2, column 1, line 70 - column 2, line 31; page 3, lines 54-61 * <br> --- | 1-3,9, 15-17, 20 | C 02 F 3/12 <br> C 02 F 3/06 <br> C 02 F 3/20 |
| X | DE-A-2 936 826 (MASCHINENFABRIK H. GEIGER) <br><br> * page 14, line 10 - page 15, line 13 * <br> --- | 1,5,6, 7,15, 18 | |
| A | CH-A- 479 493 (E. KELLER) <br> * column 4, lines 4-30; figures 3,4 * <br> --- | 12 | |
| A | CH-A- 383 280 (PASSAVANT) <br> * page 3, lines 60-70; figure 11 * <br><br> --- | 8,19 | TECHNICAL FIELDS SEARCHED (Int. Cl. ³) |
| A | BE-A- 881 613 (RENSONNET) <br> * page 5, line 8 - page 6 * <br> --- | 13;22 | C 02 F |
| P,A | EP-A-0 092 159 (LINDE) <br> * page 5, line 26 - page 6 * <br><br><br> ----- | 9 | |

The present search report has been drawn up for all claims

| Place of search | Date of completion of the search | Examiner |
|---|---|---|
| THE HAGUE | 09-03-1984 | TEPLY J. |